Europäisches Patentamt

European Patent Office

Office européen des brevets

(11) Veröffentlichungsnummer: **0 331 882**
**A2**

## (12) EUROPÄISCHE PATENTANMELDUNG

(21) Anmeldenummer: 89100761.9

(22) Anmeldetag: 18.01.89

(51) Int. Cl.⁴: **G02B 6/44**

(30) Priorität: 05.03.88 DE 3807269

(43) Veröffentlichungstag der Anmeldung:
**13.09.89 Patentblatt 89/37**

(84) Benannte Vertragsstaaten:
**AT BE CH DE ES FR GB IT LI NL**

(71) Anmelder: **ANT Nachrichtentechnik GmbH**
**Gerberstrasse 33**
**D-7150 Backnang(DE)**

(72) Erfinder: **Lenge, Norbert, Dr.-Ing.**
**Fliederweg 18**
**D-7592 Renchen(DE)**
Erfinder: **Sange, Bernd, Dipl.-Phys.**
**Wilhelm-Busch-Weg 6**
**D-7640 Kehl 16(DE)**
Erfinder: **Olejak, Gerhard, Ing.(grad.)**
**Heineweg 7**
**D-7640 Kehl 16(DE)**
Erfinder: **Krahn, Friedrich, Dr.**
**Am Brücker Bach 33**
**D-5060 Bergisch-Gladbach 1(DE)**

(54) **Längswasserdichtes optisches Nachrichtenkabel.**

(57) Bei einem optischen Nachrichtenkabel, bestehend aus einem Zentralelement (1) und Hüllen (2), in denen Lichtwellenleiter geführt sind, wird auf dem Zentralelement (1) zur Erreichung einer Längswasserdichtheit quellförmiges Material in Form von quellfähigen Bändern (6,7) oder einer quellfähigen Schicht aufgebracht. Auf die verseilten Hüllen (2) können ebenfalls solche Bänder (8,9) aufgebracht sein. Ein derart gestaltetes optisches Nachrichtenkabel ist besonders montagefreundlich (Figur).

EP 0 331 882 A2

## Längswasserdichtes optisches Nachrichtenkabel

Die Erfindung geht aus von einem optischen Nachrichtenkabel gemäß dem Oberbegriff des Patentanspruchs 1.

Solche optischen Nachrichtenkabel sind bekannt (DE 31 18 172 A1, DE 32 41 500 A1). Längswasserdichtheit bei optischen Nachrichtenkabeln kann dadurch erreicht werden, daß die Zwischenräume zwischen den umhüllten Lichtwellenleitern mit Petrolat gefüllt werden. Bei petrolatgefüllten optischen Kabeln kann es zu Verschmutzungen beim Abisolieren und Spleißen der Lichtwellenleiter durch das fettige Petrolat kommen, was schlechte Spleißverbindungen zur Folge haben kann. Des weiteren wird bei petrolathaltigen optischen Nachrichtenkabeln der Isolationswiderstand von eventuell vorhandenen Kupferpaaren oder Sternvierern durch die Diffusion der Petrolatanteile in der Kunststoffisolierung dieser Kupferadern herabgesetzt. Um diese Nachteile zu vermeiden, wurden bei den optischen Nachrichtenkabeln gemäß DE 31 18 172 A1 bzw. DE 32 41 500 A1 alle Zwischenräume zwischen Kabelmänteln und den kunststoffumhüllten Lichtwellenleitern mit einem bei Feuchtigkeit quellenden Pulver ausgefüllt.

Aufgabe der Erfindung ist es ausgehend vom Oberbegriff des Patentanspruchs 1 ein montagefreundliches Kabel anzugeben, welches eine ausreichende Längswasserdichtheit aufweist. Diese Aufgabe wird durch die kennzeichnenden Merkmale des Patentanspruchs 1 gelöst. Die Unteransprüche zeigen vorteilhafte Weiterbildungen auf.

Das optische Nachrichtenkabel gemäß der Erfindung ist insbesondere dadurch montagefreundlich, daß sich das Quellband bzw. die Quellschicht leicht entfernen läßt, was die Zugänglichkeit zu den Lichtwellenleitern erleichtert. Bei der Kabelherstellung ist es nicht nötig, ein Quellpulver einzubringen. Die quellfähigen Bänder oder Schnüre können auf einfache Art mitverseilt werden. Mit dem erfindungsgemäßen Kabel gelingt es, die entstehenden Hohlräume zwischen den Verseilelementen - Hüllen mit Lichtwellenleitern - und dem Zentralelement sowie zwischen den Verseilelementen und den bedarfsweise vorgesehenen Zugentlastungselementen im Falle des Wassereintritts innerhalb weniger Sekunden abzudichten. Tritt infolge einer Beschädigung Wasser in das Kabel ein, so werden durch das Aufquellen der einzelnen Quellschichten die Verseilhohlräume wasserdicht verschlossen. Da zudem Hohl-bzw. Bündeladern des Kabels mit einem tixotropen Gel gefüllt sind, ist ein Ausbreiten des Wassers in Kabellängsrichtung nicht möglich.

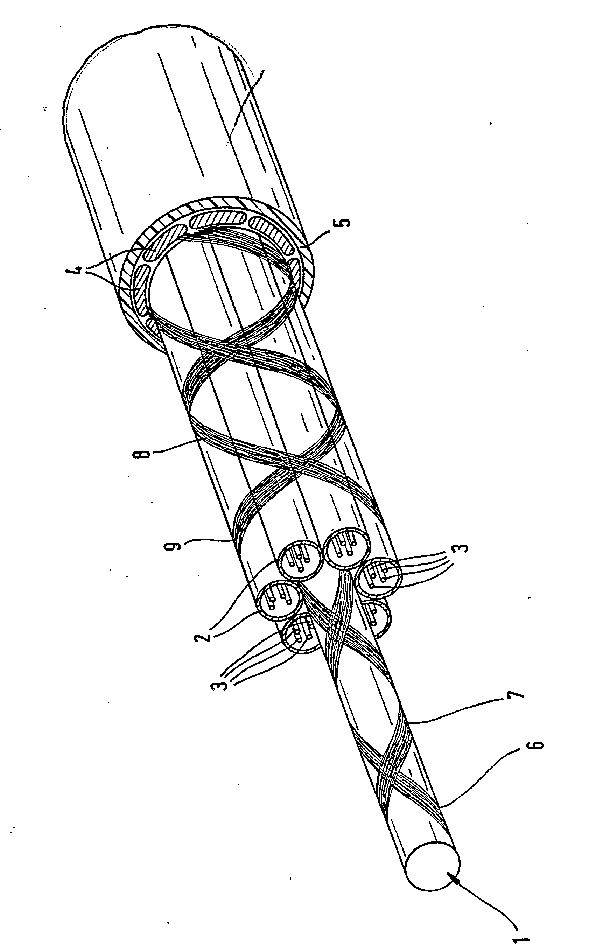

Anhand der Zeichnung wird ein Ausführungsbeispiel der Erfindung nun näher erläutert. Diese zeigt den prinzipiellen Aufbau einer Ausführungsform des Kabels nach der Erfindung.

Das optische Nachrichtenkabel besteht aus einem Zentralelement 1, beispielsweise einem glasfaserverstärkten Kunststoffstab, als Stützelement, den Verseilelementen in Form von Hüllen 2 - Bündeladern -, in denen die Lichtwellenleiter 3 geführt sind. Um ein Ausbreiten von Wasser innerhalb der Bündeladern in Kabellängsrichtung zu verhindern, sind die Bündeladern mit einem tixotropen Gel gefüllt. Um die Verseilelemente herum sind sektorförmige Zugentlastungselemente 4 vorgesehen. Ein Schichtenmantel 5, vorzugsweise aus Polyäthylen, dient als äußere Kabelumhüllung.

Erfindungsgemäß weist das optische Nachrichtenkabel Bänder bzw. Schichten aus zumindest teilweise quellfähigem Material auf, um ein Ausbreiten von Wasser in Kabellängsrichtung zu verhindern. Wie die Figur als ein Ausführungsbeispiel zeigt, sind wendelförmig um das Zentralelement 1 zwei bei Feuchtigkeit quellfähige Bänder 6 und 7 mit jeweils entgegengesetzter Schlagrichtung verseilt. Diese quellfähigen Bänder 6,7 können beispielsweise durch Verkleben fest mit dem Zentralelement 1 verbunden werden, bevor die Verseilelemente 2 aufgebracht werden. Anstelle von zwei Bändern genügt gegebenenfalls das Aufbringen eines Bandes. Das quellfähige Band, bzw. die quellfähigen Bänder können schichtartig aufgebaut sein. Wenn das Band / die Bänder nur eine quellfähige Außenschicht besitzen, wird die nicht quellfähige Außenschicht vorzugsweise auf dem Zentralelement 1 angeordnet. Das Band / die Bänder können auch zwei quellfähige Außenschichten aufweisen, die auf der Ober- und Unterseite einer nicht quellfähigen Trägerschicht aufgebracht sind. Anstelle von quellfähigen Bändern, die um das Zentralelement 1 verseilt sind, kann das Zentralelement 1 mit einer quellfähigen Schicht, welche aus einem Quellpulver gebildet ist, ausgestattet werden, wobei diese Schicht beispielsweise durch Verkleben am Zentralelement fixiert ist.

In einer weiteren Ausgestaltung der Erfindung sind die Verseilelemente - Hüllen 2 - mit quellfähigen Bändern 8,9 abgebunden, die vorzugsweise zwei quellfähige Außenschichten aufweisen. Diese Bänder 8,9 sind mit jeweils entgegengesetzter Schlagrichtung verseilt. Sind die Verseilelemente - Hüllen 2 - auf andere Weise abgebunden, genügt es meist, ein quellfähiges Band 8 mit vorzugsweise zwei Quellschichten wendelförmig über den abgebundenen Verseilelementen anzuordnen.

Eine weitere Ausgestaltung der Erfindung sieht vor, zwischen den Verseilelementen - Hüllen 2 - quellfähige Schnüre (nicht dargestellt) mitzuverseilen.

Als quellfähiges Material kann eine aufgeschlossene Zellulose verwendet werden.

## Ansprüche

1. Längswasserdichtes optisches Nachrichtenkabel mit einem Zentralelement (1), um welches mehrere in Hüllen (2) geführte Lichtwellenleiter (3) angeordnet sind, und welches ein bei Feuchtigkeit quellfähiges Material enthält,
dadurch gekennzeichnet,
daß das quellfähige Material wendelförmig in Form mindestens eines zumindest teilweise quellfähigen Bandes (6,7) oder einer quellförmigen Schicht um das Zentralelement (1) angeordnet ist.

2. Nachrichtenkabel nach Anspruch 1, dadurch gekennzeichnet, daß zwei Bänder (6,7) aus quellfähigem Material mit jeweils entgegengesetzter Schlagrichtung um das Zentralelement 81) verseilt sind.

3. Nachrichtenkabel nach Anspruch 1 oder 2, dadurch gekennzeichnet, daß das quellfähige Band, bzw. die quellfähigen Bänder (6,7) auf dem Zentralelement (1) beispielsweise durch Verkleben fixiert ist/sind.

4. Nachrichtenkabel nach einem der Ansprüche 1 bis 3, dadurch gekennzeichnet, daß das Band bzw. die Bänder (6,7) schichtenartig aufgebaut sind mit jeweils einer quellfähigen und einer nicht quellfähigen Außenschicht.

5. Nachrichtenkabel nach einem der Ansprüche 1 bis 3, dadurch gekennzeichnet, daß das Band bzw. die Bänder (6,7) schichtenartig aufgebaut sind und zwei quellfähige Außenschichten aufweisen.

6. Nachrichtenkabel nach Anspruch 4, dadurch gekennzeichnet, daß die nicht quellfähige Außenschicht des Bandes bzw. der Bänder auf dem Zentralelement (1) aufliegt.

7. Nachrichtenkabel nach einem der Ansprüche 1 bis 6, dadurch gekennzeichnet, daß die Hüllen (2), in denen die Lichtwellenleiter (3) geführt sind, um das Zentralelement (1) und über dem quellfähigen Band / den quellfähigen Bändern (6,7) / der quellfähigen Schicht verseilt sind und daß zusätzliche quellfähige Bänder (8,9) mit zwei Quellschichten zum Abbinden der verseilten Hüllen (2) vorgesehen sind.

8. Nachrichtenkabel nach einem der Ansprüche 1 bis 6, dadurch gekennzeichnet, daß die Hüllen (2), in denen die Lichtwellenleiter (3) geführt sind, um das Zentralelement (1) und über dem quellfähigen Band / den quellfähigen Bändern (6,7) / der quellfähigen Schicht verseilt sind und daß über den abgebundenen verseilten Hüllen (2) in Längsrichtung zusätzlich ein quellfähiges Band (8) mit zwei Quellschichten angeordnet ist.

9. Nachrichtenkabel nach einem der Ansprüche 1 bis 8, dadurch gekennzeichnet, daß zwischen den Hüllen (2), in denen die Lichtwellenleiter (3) geführt sind, quellfähige Schnüre mitverseilt sind.

10. Nachrichtenkabel nach einem der Ansprüche 1 bis 9, dadurch gekennzeichnet, daß die Hüllen (2), in denen die Lichtwellenleiter (3) geführt sind, mit einem quellfähigen Material gefüllt sind.

11. Nachrichtenkabel nach einem der Ansprüche 1, 2, 3, 9 oder 10, dadurch gekennzeichnet, daß die um das Zentralelement (1) angeordnete quellfähige Schicht aus einem Quellpulver gebildet ist, und daß diese Schicht am Zentralelement (1) beispielsweise durch Verkleben fixiert ist.